# EUROPÄISCHE PATENTSCHRIFT

(11) **EP 2 754 705 B1**
(45) Veröffentlichungstag und Bekanntmachung des Hinweises auf die Patenterteilung: **15.03.2017**
(21) Anmeldenummer: 14000006.8
(22) Anmeldetag: 02.01.2014
(51) Int. Cl.: C09J 7/02, A47G 27/00

(54) **Selbstklebefolie zum Verkleben eines Belags**
Self-adhesive film for bonding a covering
Feuille autocollante pour coller un revêtement

(30) Priorität: 09.01.2013 DE 102013000252
(43) Veröffentlichungstag der Anmeldung: 16.07.2014
(73) Patentinhaber: Uzin Tyro AG, 6374 Buochs (CH)
(72) Erfinder: Wigger, Thomas, 6232 Geuensee (CH)
(74) Vertreter: Isarpatent

(56) Entgegenhaltungen:
- EP-A1- 1 805 275
- EP-A2- 1 471 126
- DATABASE WPI Week 200973 Thomson Scientific, London, GB; AN 2009-Q44294 XP002723636, & JP 2009 249582 A (DAIWA KASEI SHOJI KK) 29. Oktober 2009 (2009-10-29)

## Beschreibung

Die Erfindung betrifft eine Selbstklebefolie zum Verkleben eines Belags auf einem Untergrund. Die Selbstklebefolie weist eine Trägerschicht aus einer Folie, z.B. einer Kunststofffolie, auf. Die Trägerschicht ist an einer oberen, dem Belag zugewandten Oberfläche und an einer unteren, dem Untergrund, insbesondere einem Fußboden, einer Treppe oder einer Wand, zugewandten Oberfläche mit einer Haftkleberbeschichtung gemäß dem Oberbegriff des Anspruchs 1, beschichtet.

Beläge können beispielsweise elastische Beläge für einen Untergrund wie für einen Fussboden oder wie für eine Wand oder wie für Treppenstufen einer Treppe sein, welche in Bahnenform oder auch in Einzelelementen aneinander stossend verlegt werden können, oder es können auch Sockelleisten oder Wandhochzüge sein. Elastische Beläge und Sockelleisten weisen prozesstechnisch bedingt eine mehr oder weniger stark ausgeprägte Neigung zu Dimensionsänderungen - insbesondere Schrumpfungen, Verformungen, Aufwölbungen auf. Insbesondere bei der Verlegung von Belägen mit glatten Belagsrücken oder bei der Verlegung einer Selbstklebefolie auf glatten Untergründen treten Luftansammlungen bzw. Luftblasen zwischen Belag und Selbstklebefolie bzw. zwischen Selbstklebefolie und Untergrund auf, die bereits beim Verlegen durch Einschliessen von Spuren von Luft verursacht werden und sich bei Belastung und Alterung deutlich sichtbar ausbilden. Diese Luftansammlungen und Blasen können die Treppenbeläge, Wandbeläge und Bodenbeläge stellenweise derartig verformen, dass störende Aufwölbungen entstehen. Zudem können beim Begehen z.B. von so verlegten Bodenbelägen knackende Geräusche entstehend, die durch das Verdrücken und Verschieben von Luftansammlungen bzw. Luftblasen verursacht werden.

Für die Bodenbelagsverklebung, oder für die Wandbelagsverklebung oder für die Treppenbelagsverklebung oder für die Verklebung von Sockelleisten kommen heute schon doppelseitige Selbstklebefolien/-bänder zum Einsatz, beispielsweise Produkte des Unternehmens Uzin Utz AG mit den Produktbezeichnungen SIGAN 1, SIGAN 2 oder UZIN CONTACT. Bei solchen Selbstklebefolien/-bändern ist zwar die Verarbeitbarkeit gegenüber z.B. der Verwendung von Nassklebern stark verbessert und auch ist damit üblicher Weise eine rasche Belastbarkeit nach der Verklebung gegeben. Allerdings sind die bekannten Selbstklebefolien teilweise entweder wasserdampfdurchlässig oder wasserdampfoffen, aber stets ist die zum verlegenden Bodenbelag hingewandte Seite der Klebefolien vollflächig ausgerüstet, d.h. vollflächig und gleichmäßig mit Haftkleber beschichtet.

Diese Art von Klebebändern weist mehrere Nachteile bei der Verlegung auf. Insbesondere bei der Verlegung von flexiblen flächigen Bodenbelägen wie PVC-Bahnen oder CV-Bahnen mit nahezu glattem Rücken gelingt es einerseits kaum, den Bodenbelag ohne Lufteinschlüsse auf die Oberseite der bereits auf den Boden aufgebrachten selbstklebenden Folie aufzubringen. Andererseits können beispielsweise bei bereits mit Selbstklebefolie ausgestatten Fliesen oder Sockelleisten Lufteinschlüsse zwischen Untergrund und Selbstklebefolie beim Verlegen eingebracht werden, die sich bei Belastung und Alterung zu Auswölbungen des Belages ausbilden.

Die zwischen Selbstklebefolie und Bodenbelag bzw. zwischen Selbstklebefolie und Untergrund eingeschlossene Luft kann nicht entweichen, da die Selbstklebefolien vollflächig mit Klebstoff ausgerüstet sind und die sich bildenden Luftpolster hermetisch eingeschlossen werden. Beim Begehen oder Belasten des verlegten Bodenbelags werden die Lufteinschlüsse komprimiert und zusammengeschoben und es bilden sich deutlich sichtbare den Belag auswölbende Blasen, die je nach Luftdurchlässigkeit des Bodenbelags und/oder des Untergrunds mehr oder weniger dauerhaft verbleiben. Dadurch kann insbesondere die Klebeverbindung zum Untergrund geschwächt werden, da in den entsprechenden Bereichen der Blasenbildung kein durchgängiger Klebekontakt besteht. Dies kann insbesondere bei glatten Belagsrücken und glatten Untergründen auftreten.

Ein weiterer Nachteil der vollflächigen, druckempfindlichen Haftkleberausrüstung der zum Bodenbelag hingewandten Seite der Selbstklebefolie oder auch der zum Untergrund hingewandten Seite der Selbstklebefolie macht sich bei der Verlegung von Bodenbelägen bemerkbar. Sobald die selbstklebende Folie mit dem Untergrund oder die selbstklebende Folie mit dem Bodenbelag einmal Kontakt hat, klebt die selbstklebende Folie an dem Untergrund bzw. an dem Bodenbelag fest und lässt sich weder von dem Bodenbelag noch von dem Untergrund entfernen. Damit wird ein Korrigieren der Position der Selbstklebefolie und/oder des Bodenbelags verhindert. Eine Repositionierbarkeit beim Verlegen ist damit kaum oder gar nicht mehr möglich. Insbesondere auf glatten Untergründen und/oder bei glatten Belagsrücken (siehe weiter oben) können dabei zusätzlich auch noch Lufteinschlüsse und damit verbundene Faltenbildung verstärkt auftreten. Somit ergibt sich die Problematik, dass bei der Verlegung der bisher bekannten Selbstklebefolien ein spannungs- und blasenfreies Verlegen ohne Ausbildung von Auswölbungen an flächigen Produkten aus Bodenbelägen oder Wandbelägen oder Treppenbelägen schwierig ist und bei fehlerhafter Verlegung kaum korrigierbar ist, insbesondere auf entsprechend glatten Untergründen.

Derartige Blasen mit eingeschlossener Luft werden deshalb von dem verlegenden Handwerker mit einem Messer aufgestochen, was arbeitsintensiv ist und das Klebesystem zudem in der mechanischen Integrität schwächt. Außerdem werden kleinere Blasen dabei manchmal übersehen und schließlich bilden sich daraus größere Blasen oftmals erst nach längerer Belastung des auf dem Untergrund mit Hilfe des Selbstklebebandes fixierten Belags. Der Einschluss von Luft kann zwar reduziert werden, wenn personalintensiv die Selbstklebefolie durch zwei Personen auf dem Untergrund aufgebracht wird oder der Belag auf der Selbstklebefolie vorsichtig eingeschoben und sogleich angerieben wird, jedoch kann dieses personalintensive Verlegeverfahren den Einschluss von Luft nicht vollständig ausschliessen. Zudem können enge räumliche Verhältnisse ein derartiges Verlegeverfahren stark erschweren oder unmöglich machen.

Im Folgenden sollen bisher gemäß dem Stand der Technik angewandte Verlegemethoden näher erläutert werden.

Übliche Selbstklebefolien für die gross- bzw. vollflächige Klebung von Boden-, Treppen- und Wandbelägen weisen normalerweise Haftklebebeschichtungen auf, die mehrheitlich plan bzw. glatt sind. Dies macht es bei mehrheitlich glatten Untergründen oder Belagsrücken nahezu unmöglich diese zu verlegen ohne Luft zwischen den Klebeschichten einzuschliessen. Um damit dennoch möglichst eine blasenfreie Verlegung zu ermöglichen, muss eine entsprechende Selbstklebefolie so aufgebracht werden, dass diese beim allerersten Kontakt mit dem Untergrund keine Lufteinschlüsse bildet bzw. unmittelbar dort gar keine Luft eingeschlossen wird.

Dies geht beispielsweise nur indem eine Person eine Rolle einer solchen Selbstklebefolie hält und eine zweite Person diese auf dem Untergrund unmittelbar in der Kontaktzone zum Untergrund z.B. mit einem Besen anreibt.

Eine neue, personal einsparende Alternative zu dieser ersten beschriebenen Methode des Standes der Technik ist neuerdings ein Abrollgerät mit integriertem Besen z.B. der Lay-Brush EVO des Unternehmens D-Tack. Zwar kann unter gewissen Umständen mit diesem Spezialwerkzeug eine nahezu blasenfreie Verlegung durch nur eine Person erzielt werden, wegen der Länge des Stiels des Werkzeugs kann dieses allerdings erst 1,5 - 2 m von der Wand entfernt eingehängt und verwendet werden. In diesem wandnahen Bereich oder beim Auftreten von Hindernissen hilft dieses Werkzeug also nicht gegen Lufteinschlüsse. Hier müssen die Blasen, wie beschrieben, z.B. weiterhin mühsam von Hand aufgestochen werden. Auch muss das Werkzeug nach jeder verarbeiteten Klebefolienbahn ausgehängt und wieder neu eingesetzt werden. Somit bringt dieses Werkzeug insbesondere in kleinen Räumen oder unter beengten Platzverhältnissen keine der beschriebenen Vorteile. Wenn außerdem bei längeren Bahnen der Versatz zu stark ist, kann nicht nur einfach geschnitten und weitergefahren werden, sondern muss das Werkzeug ausgehängt und nach dem Schneiden und neu ansetzen wieder neu eingesetzt werden.

Beide oben beschriebenen Methoden sind bei Belagsapplikationen auf Treppen oder Wänden nicht einsetzbar.

Beispielsweise für die Applikation von Dekoklebefolien wird gelegentlich der sogenannte Wassertrick verwendet. Dazu wird die zu beklebende Fläche mit einer schwachen Seifenlösung benetzt und die Selbstklebefolie darauf aufgebracht. Dann kann noch die Luft zusammen mit dem Grossteil des Wassers ausgerieben werden. Diese Methode ist jedoch für die Klebung von Bodenbelägen nicht geeignet, da durch die einwirkende Wassermenge der Untergrund geschädigt werden kann und die Restfeuchte je nach Belag und Untergrund dauerhaft eingesperrt bleibt. Zudem kann so ein Teil des Wassers im Randbereich z.B. in den Estrich laufen, was das Risiko einer Schädigung des Estriches birgt.

Wenn Blasen beim Verlegen von Belägen auftreten, können diese Fehler leichter korrigiert werden, wenn auf einer der beiden Oberflächen der selbstklebenden Folie die Adhäsionseigenschaften der Haftklebeschichten je nach Anwendungsfall vermindert sind, so dass der Verklebevorgang unter Vermeidung von Luftblasen wiederholt werden kann. Die Verminderung der Adhäsionseigenschaften wird in den Druckschriften US 6,121,166, DE 32 43 567 C3, US 4,735,837, GB 2063710, DE 298 24 685 U1 sowie EP 0 567 110 dadurch erreicht, dass eine der beiden Haftkleberbeschichtungen gegenüber der anderen strukturiert wird, indem durch Perforation, oder durch klebstofffreie Bereiche oder durch dünnere Klebstoffbereiche eine verminderte Adhäsionsfläche entsteht. Die Strukturierung wird dadurch unterstützt, dass in die Klebstoffschicht textile Strukturen eingebettet werden, die für eine Unebenheit der Haftkleberbeschichtung sorgen, was die Adhäsionseigenschaften deutlich herabsetzen kann, so dass keine befriedigend sichere Verklebung möglich ist. Oftmals sind diese hier erwähnten Strukturen derart erhaben, dass diese die Oberflächenstrukturen der darauf verlegten Boden-, Treppen- und Wandbelägen dermassen verändern, dass diese optisch störend beeinträchtigt werden.

Die deutsche Patentschrift DE 197 16 996 C1 beschreibt ein Verfahren zur Herstellung eines druckempfindlichen doppelseitigen Klebebands auf Kautschukbasis, bei welchem mittels Koextrusion auf einem Trägermaterial eine zusätzliche Sperrschicht aufgelegt wird, welche dann wiederum vollflächig jeweils mit Schmelzhaftkleber beschichtet wird. Von den beschriebenen Schmelzklebstoffen ist bekannt, dass sie in erheblichem Masse Weichmacher aus üblichen Boden-, Treppen- und Wandbelägen aufnehmen und Stoffmigration zulassen und dabei selber sehr stark ihre physikalischen Eigenschaften ändern. Mit diesem Aufbau kann weder das Problem der Dimensionsänderungen noch das Problem der Blasenbildung und partiellen Aufwölbung eines Belags bei Belastung gelöst werden.

Die deutsche Offenlegungsschrift DE 1 544 777 betrifft die Verklebung von weichmacherhaltigen Stoffen mit anderen weichmacherhaltigen oder weichmacherfreien Stoffen, wobei dort zwischen den Stoffen eine weichmacherundurchlässige Folie, z.B. eine Metallfolie aus Aluminium, eingeklebt wird, welche die Wanderung von Weichmachern verhindern soll, womit jedoch nicht das Problem der Blasenbildung und der partiellen Aufwölbung eines nachgiebigen Belags bei Belastung gelöst werden kann.

Aus der Druckschrift DE 10 2004 052 022 B4 ist eine Selbstklebefolie mit Luftkanälen bekannt, wobei die Luftkanäle derart gestaltet sind, dass sie in einer der Haftkleberbeschichtungen angeordnet sind, womit gleichzeitig und gezielt die Adhäsion der Haftkleberbeschichtung deutlich herabgesetzt wird. Ein Problem ist dabei die Luftkanäle während des Verlegens und auch später bei Belastung eines Belags ständig offen zu halten, um sicherzustellen, dass die Luftkanäle ihre Funktion voll erfüllen. Dadurch können unter gewissen Umständen, d.h. je nach Ausdehnung der dortigen Luftkanäle, diese Luftkanäle sich auch ungewollt durch den Belag abzeichnen. Durch die verhältnismässig reduzierte Klebefläche ist die Anhaftung/Haftstärke zumindest unmittelbar nach der Applikation der dortigen Selbstklebefolie im Verhältnis der klebenden zur gesamten Fläche unerwünscht reduziert. Hingegen ist die initiale Anhaftung (Tack) nur ungenügend reduziert, um Lufteinschlüsse in genügendem Masse zur reduzieren oder eine genügende Repositionierbarkeit zu ermöglichen.

Aus der Druckschrift US 5,344,693 ist ein Substrat bekannt, das Abstandsmittel aufweist, die in einer nach außen führende Richtung angeordnet sind, so dass auf diesem Substrat Oberflächen von klebenden oder nicht klebenden Substraten aufgebracht werden können, die problemlos wieder abgewickelt werden können, da sie lediglich auf den Abstandshaltern aufliegen und die dazwischen angeordnete Klebstoffschicht nicht berühren.

Die EP 1 471 126 A2 beschreibt eine Selbstklebefolie, geeignet zur Bodenbelagsverlegung, welche haftklebefreie Strukturen in einer Oberfläche aufweisen kann. Diese Strukturen sind vollständig mit der dortigen Haftkleberbeschichtung umgeben.

Das Dokument Database WPI Week 200973 Thomson Scientific, London, GB; AN 2009-Q44294 und JP 2009 249582 A beschreibt eine Selbstklebestruktur mit Partikeln, welche eine unebene Oberfläche der dortigen Klebstoffbeschichtung ergeben.

Die EP 1805 275 A1 beschreibt eine Selbstklebefolie mit Luftkanälen und/oder Luftkammern, welche in der dortigen Haftkleberbeschichtung vorgesehen sein können.

Es ist die Aufgabe der vorliegenden Erfindung, eine Selbstklebefolie vorzusehen, welche die Nachteile des Standes der Technik überwindet, und insbesondere eine Selbstklebefolie vorzusehen, welche auf konstruktiv einfache Weise zuverlässig ein partielles Ansammeln von Luft und Feuchtigkeit unter dem Belag und/oder unter der Selbstklebefolie mit aufgeklebtem Belag verhindert und gleichzeitig die Adhäsionseigenschaften gegenüber vollflächigen Haftkleberbeschichtungen nicht vermindert oder beeinträchtigt und dabei eine hohe strukturelle Festigkeit und Integrität erhält und dabei eine Repositionierung auf dem Untergrund oder des Belag darauf ermöglicht.

Diese Aufgabe wird erfindungsgemäß mit einer Selbstklebefolie mit den Merkmalen gemäß dem Anspruch 1 gelöst. Bevorzugte Ausführungsformen der Erfindung sind in den Unteransprüchen definiert.

Die erfindungsgemäße Selbstklebefolie dient zum Verkleben eines Belags auf einem Untergrund. Die Selbstklebefolie weist eine Trägerschicht aus einer Folie, z.B. einer Kunststofffolie, auf. Die Trägerschicht ist an einer oberen, dem Belag zugewandten Oberfläche und an einer unteren, dem Untergrund, insbesondere einem Fußboden, einer Treppe oder einer Wand, zugewandten Oberfläche mit einer Haftkleberbeschichtung beschichtet. Die Selbstklebefolie ist zumindest an einer ihrer Oberflächen in einer Ebene, welche orthogonal zu einer Flächennormale der mindestens einen Oberfläche der Selbstklebefolie verläuft, mit einer linienförmigen oder punktförmigen Abstandshalterstruktur zum Untergrund hin oder zum Belag hin ausgebildet. Die Abstandshalterstruktur ist zwischen der Selbstklebefolie und dem Untergrund oder zwischen der Selbstklebefolie und dem Belag angeordnet. Die Abstandshalterstruktur ist also zumindest teilweise nicht von Haftkleberbeschichtungsmaterial umgeben bzw. nicht vollständig in die entsprechende Haftkleberbeschichtung eingebettet und so nicht vollständig davon umgeben.

Die erfindungsgemäße Selbstklebefolie weist eine Trägerschicht auf, welche an einer oberen, dem Belag zugewandten Oberfläche und an einer unteren, dem Untergrund zugewandten Oberfläche mit einer Haftkleberbeschichtung beschichtet ist. Es kann dabei eine Anwendung denkbar sein, bei welcher beispielsweise mehrteilige PVC-Designbelagselemente auf einem Fußboden oder auf Wandbereiche angeklebt werden oder Sockelleisten im Bereich des Sockels von Wänden im Innenausbau angeklebt werden.

Die erfindungsgemäße Selbstklebefolie hat den Vorteil, dass eine vollflächige Anbringung der Selbstklebefolie auf glatten Böden, Wänden oder Treppen ohne die Ausbildung von Lufteinschlüssen oder Luftblasen, die sichtbare Aufwölbungen des Belags zur Folge haben, entstehen. Auch wird mit der linienförmigen oder punktförmigen Abstandshalterstruktur die volle Klebefläche nahezu beibehalten und somit eine sichere Klebung eines Belags auf einem Untergrund sichergestellt. Zudem bildet sich trotz der linienförmigen oder punktförmigen Abstandshalterstruktur eine dadurch unveränderte Oberflächenstruktur der Beläge aus, d.h. es kommt nicht zu einer Sichtbarkeit, z.B. durch Durchdrücken der Abstandshalterstruktur durch den Belag, da sich durch die erfindungsgemäße punkt bzw. linienförmige Feinheit der Abstandshalterstruktur diese nicht an der Oberfläche des zu verlegenden Belags abzeichnet. Die aufgrund der linienförmigen und punktförmigen Abstandshalterstruktur angebrachten Strukturierungen bilden sich also im Gegensatz zu Luftblasen und zu den bekannten gröberen Strukturen des Standes der Technik nicht auf dem aufzubringenden Bodenbelag sichtbar ab und sind nicht auf der oberen Belagsoberfläche erkennbar. Überraschenderweise kann über eine derartige, auf der oberen Belagsoberfläche nicht erkennbare, linienförmige oder punktförmige Abstandshalterstruktur dennoch eine zuverlässige und effektive Entlüftung erfolgen. Sie erlaubt nämlich, dass die eingeschlossene Luft quer zur Verlegerichtung ausgerieben werden kann. Darüber hinaus entweicht eingeschlossene Luft, die noch nicht während des Verlegens ausgerieben wurde, mit der Zeit entlang der Abstandshalterstruktur, auch wenn schon ein Belag auf dem Klebesystem aus Selbstklebefolie mit Abstandshalterstruktur verlegt worden ist. Dabei bleibt die Klebkraft der Selbstklebefolie über die Zeit voll erhalten und es ist, da zur Belüftung bzw. zur Entfernung der eingeschlossenen Luft auch keine Perforierung oder ein Aufstechen, wie beschrieben, erforderlich ist, die mechanische Integrität, d.h. die mechanische Unversehrtheit, der erfindungsgemäßen Selbstklebefolie dabei immer gegeben. Mit der erfindungsgemäßen Selbstklebefolie kann also auch von nur einer einzelnen Person bei allen, auch beengten Platzverhältnissen, einwandfrei, blasenfrei und spannungsfrei die Selbstklebefolie verlegt werden.

Darüber hinaus kann die erfindungsgemäße Selbstklebefolie auch besonders einfach hergestellt werden, da die Anstandshalterstruktur nur auf die entsprechende Oberfläche der Selbstklebefolie aufgebracht, z.B. aufgelegt, werden braucht. Eine aufwändige Perforierung der Selbstklebefolienstruktur oder eine Einbettung einer Struktur in die Haftkleberbeschichtung der Selbstklebefolie, so dass die Struktur von dem Haftklebermaterial vollständig umschlossen wird, ist nicht erforderlich. Dadurch ist es auch möglich, dass z.B. übliche standardmäßig bereits verfügbare Folienmaterialien eingesetzt werden können ohne die Dimensionsstabilität oder die Entlüftungsmöglichkeit zu beeinträchtigen.

In einer weiteren Ausführungsform der Erfindung ist die Abstandshalterstruktur sowohl auf der unteren als auch auf der oberen Oberfläche der jeweiligen Haftkleberbeschichtung ausgebildet. Das hat den Vorteil, dass sich sowohl zwischen der Selbstklebefolie und dem Belag als auch zwischen der Selbstklebefolie und dem Untergrund keine Luftblasen bilden können, da die Abstandshalterstruktur dafür sorgt, dass die Luft quer zur Verlegerichtung bzw. quer zur Längsrichtung der selbstklebenden Folie entweichen kann.

Dieses wird dadurch gewährleistet, dass die Abstandshalterstruktur teilweise auf der Haftkleberbeschichtung punktförmig oder linienförmig angeordnet ist und auf der Haftkleberbeschichtung punktförmig oder linienförmig mindestens teilweise haftkleberfrei angeordnet ist. Damit wird in vorteilhafter Weise erreicht, dass genügend minimale Zwischenräume geschaffen werden, so dass Luftmoleküle sowie Feuchtigkeitsmoleküle entlang der Abstandshalterstruktur aus dem Klebstoffverbund ausdiffundieren können, zumal eine Haftfreiheit entlang der linienförmigen oder der punktförmigen Berührung zwischen dem Untergrund oder dem Belag mit der Abstandshalterstruktur auch nach dem Verkleben der Zwischenräume zwischen der Abstandshalterstruktur mit dem jeweiligen Bereich des Untergrundes oder des Belages sichergestellt ist, insbesondere auch bei glattflächigen Belägen, z.B. Polyvinylchlorid- oder Enomer-Belägen.

In einer weiteren Ausführungsform der Erfindung ist es vorgesehen, dass die Abstandshalterstruktur mit ihrem Querschnitt teilweise in der Haftkleberbeschichtung eingebettet oder darauf aufgelegt ist. Bei dieser Ausführungsform der Erfindung vermindert sich der Abstand der Ebene, welche orthogonal zu einer Flächennormale der mindestens einen Oberfläche der Selbstklebefolie verläuft um den Betrag, um den der Querschnitt in die Haftklebebeschichtung eingebettet ist. Dabei wird jedoch darauf geachtet, dass nach wie vor mindestens teilweise die Abstandshalterstruktur haftkleberfrei bleibt, nämlich soweit die Abstandshalterstruktur aus der Haftkleberbeschichtung herausragt.

In einer weiteren Ausführungsform der Erfindung weist die Selbstklebefolie eine begrenzte Breite b und unterschiedliche Fertigungslängen auf. Je nach Anwendung kann die Selbstklebefolie zweckmäßig eine Breite b in einem Bereich zwischen 30 mm ≤ b ≤ 2000 mm aufweisen, bevorzugt in einem Bereich zwischen 500 mm ≤ b ≤ 1500 mm und bevorzugter in einem Bereich zwischen 600 mm ≤ b ≤ 1000 mm. Dabei kann die Breite b bei Verwendung für Treppen besonders bevorzugt in einem Bereich zwischen 100 mm ≤ b ≤ 500 mm liegen, insbesondere bevorzugt in einem Bereich von 150 mm ≤ b ≤ 350 mm liegen, bei Verwendung für Sockelleisten kann die Breite besonders bevorzugt in einem Bereich zwischen 20 mm ≤ b ≤ 150 mm liegen, insbesondere bevorzugt in einem Bereich zwischen 30 mm ≤ b ≤ 100 mm liegen und bei Verwendung auf Böden oder Wänden kann die Breite besonders bevorzugt mindestens 350 mm betragen. Diese Breiten erlauben eine einfache Anwendbarkeit beim Verlegevorgang der so bevorzugt gestalteten erfindungsgemäßen Selbstklebefolie. Je nach Anwendung kann somit eine geeignete Verarbeitungsbreite gegeben sein.

Dabei kann die Abstandshalterstruktur auf der vollen Breite aufgebracht sein, wobei die punktweise Abstandshalterstruktur von pulverförmigen Partikeln gebildet wird, und/oder wobei die linienförmige Abstandshalterstruktur entsprechend auf der mindestens einen Haftkleberbeschichtung Fasern aufweist.

Die Fasern können in Form von Filamenten (Mono- oder Multifilamente) bzw. Fäden in beliebiger Länge bzw. als Garne von prinzipiell unendlicher Länge Anwendung finden. Die Filamente können dabei als z.B. als Monofilamente alleine und/oder z.B. als Stapelfasern und/oder endlose Multifilamente und/oder z.B. in Form von Fäden, Garnen, Zwirnen oder Faserbündel z.B. mehr oder weniger stark verdrillt bzw. gezwirnt und/oder lose, z.B. texturiert, glatt und/oder gebauscht vorliegen.

Derartige Fasern der Abstandshalterstruktur können in Längsrichtung oder in Querrichtung oder diagonal auf der Selbstklebefolie ausgerichtet sein. Auch ist es möglich, die Fasern chaotisch, sich kreuzend oder kurvenartig auszurichten. Die Fasern können darüber hinaus zur Ausbildung einer linienförmigen Abstandshalterstruktur vorgefertigte Strukturen aufweisen. Diese Strukturen oder auch die Fasern selbst können, wie erwähnt, als Monofasern oder als Multifasern z.B. in Form von Garnen verdrillt ausgebildet sein. Derartig verdrillte Fasern haben den Vorteil, dass sie Zwischenräume aufweisen, entlang derer Luftmoleküle oder Feuchtemoleküle aus dem Beschichtungssystem aus Selbstklebefolie und Belag auf einem Untergrund entweichen können.

Die Fasern können darüber hinaus aus einem Fasermaterial aus der nicht abgeschlossenen Gruppe der Naturfasern und/oder Kunstfasern gewählt werden, z.B. aus Glasfaser, Kohlefaser, Polyamidfaser, Polyesterfaser, Polyethylenfaser, Polypropylenfaser, Baumwollfaser, Cellulosefaser, Viskosefaser, Mineralfaser oder Metallfaser bestehen, besonders bevorzugt aus der nicht abgeschlossenen beispielhaften Gruppe Glas, Kohlenstoff, Polyethylen, Polyester, Polypropylen, Polyamid, Acetat, zellulosische Materialien, Polyamidimid, Polyphenylensulfid, Aramid, Polyacrylnitril, Polyurethan, Keramik, Basalt, Metall, und/oder aus Naturfasern wie Baumwolle, Leinen, oder aus Kunstfasern hergestellt aus Polymeren oder zellulosischen Polymere, Acetate, Gummi, Zellulose, und/oder Fasern und Filamente aus PE, PA, PET, und/oder aus mineralischen Filamenten, z.B. Basaltfasern, Glasfasern, Keramikfasern. Dabei sind Glasfasern und Kohlefasern zusätzlich dafür bekannt, dass sie die Formstabilität der Selbstklebefolie verstärken können, wenn sie mit ihrem Querschnitt teilweise in der Haftkleberbeschichtung eingebettet sind.

Die Fasern können bzw. die Abstandshalterstruktur kann erfindungsgemäß bevorzugt einen Bereich von 0,05 bis 10,00 % einer entsprechenden Oberfläche der Selbstklebefolie abdecken, bevorzugter den Bereich 0,5 - 5,0 %, besonders bevorzugt den Bereich 0,1- 2,0 % der entsprechenden gesamten Oberfläche einer Seite. Somit kann zum einen besonders effektiv die erfindungsgemäße Verhinderung und Abführung von Lufteinschlüssen zusätzlich verbessert werden und zum anderen wird dadurch die Klebefläche nicht in zu hohem Maße verringert, so dass dabei auch keine weitere Verringerung der Klebkraft zu befürchten ist.

Die Fasern können als Monofasern oder als Multifasern eine Faserstärke s zwischen 1 µm ≤ s ≤ 200 µm, vorzugsweise kann s zwischen 5 µm ≤ s ≤ 70 µm und besonders bevorzugt kann s zwischen 10 µm ≤ s ≤ 50 µm liegen. Die Faserstärke kann beispielsweise 30 µm betragen, was einen effektiven Kompromiss zwischen erzielter Blasenvermeidung und Klebkraft ergibt. Durch die Begrenzung auf 200 µm wird gewährleistet, dass bei einem Kreuzen von Fasern ein Maximum der Dicke der Abstandshalterstruktur von 400 µm nicht überschritten wird. Somit kann die Abstandshalterstruktur auch in Ihrer Dickenausdehnung (senkrecht zur Flächennormale der Selbstklebefolie) so relativ filigran ausgeführt sein, dass das Durchdrücken der Struktur und ein sich Abzeichnen durch den Belag besonders sicher vermeidbar ist.

Ferner ist es vorgesehen, dass die Fasern in einem Abstand a voneinander zwischen 0,1 mm ≤ a ≤ 25 mm, vorzugsweise mit a zwischen 1 mm ≤ a ≤ 15 mm und besonders bevorzugt mit a zwischen 2 mm ≤ a ≤ 6 mm angeordnet sind. Dadurch wird gewährleistet, dass die Zwischenräume zwischen den Fasern nahezu vollständig für ein Verkleben zur Verfügung stehen, wobei mit größer werdendem Abstand gleichbleibender Faser- oder Pulverstärke die Klebefläche relativ zur Abstandstruktur zunimmt. Der Abstand a kann in Abhängigkeit der Faserstärke s bzw. der Gesamtdicke der Selbstklebefolie (Summe d) zweckmäßig gewählt werden.

In einer weiteren Ausführungsform der Erfindung bilden die pulverförmigen Partikel der Abstandshalterstruktur eine Flächenbelegung w zwischen 0,01 g/m² ≤ w ≤ 5,0 g/m² aus. Diese geringe Flächenbelegung soll wiederum gewährleisten, dass die Klebeflächen gegenüber der Abstandshalterstruktur aus pulverförmigen Partikeln deutlich überwiegen.

Weiterhin ist es vorgesehen, dass die pulverförmigen Partikel einen mittleren Partikeldurchmesser d_{D} zwischen 1 µm ≤ d_{D} ≤ 200 µm, vorzugsweise d_{D} zwischen 5 µm ≤ d_{D} ≤ 100 µm, besonders bevorzugt d_{D} zwischen 20 µm ≤ d_{D} ≤ 80 µm und insbesondere d_{D} zwischen 40 µm ≤d_{D} ≤ 60 µm aufweisen.

Die Trägerschicht der Selbstklebefolie besteht erfindungsgemäß aus einer Folie, bevorzugt aus einer Kunststoffolie, und kann aus einem Polymermaterial aus der nicht abgeschlossenen Gruppe Polyethylen, Polypropylen, Polyamid (aliphatisch, aromatisch), Polyester (Aaliphatisch, aromatisch), Polyethylenporpylen, Polyethylenterephthalat, Polylactid, Polymethylmethacrylat, Polyolefine, Polyvinylbutyral, Polyvinylchlorid oder Polycarbonat bestehen. Die Verwendung von Materialien aus der nicht abgeschlossenen Gruppe Polyacrylsäureester, Polyacrylnitril, Polyamidimid, Polybutylacrylat, Polyesteramid, Polyetherimid, Polyetherketon, Polyethercarbonat, Polyimid, Polyacrylesteramid, Polyoxymethylen, Polyphenylvinyl. Polystyrol, Polyurethan, Polyvinylacetat, Polyvinylalkohol oder Polyvinylfluorid könnten je nach Anwendung auch denkbar sein. Die Trägerschicht der Selbstklebefolie kann beispielsweise auch mehrschichtig aufgebaut sein. Auch kann die Trägerschicht aus einer Metallfolie bestehen oder die Kunststofffolie kann eine oder mehrere zusätzliche Metallschicht(en), z.B. aufgedampft, aufweisen.

Die Haftkleberbeschichtung zumindest einer der Oberflächen der Selbstklebefolie kann zweckmäßig aus einem Haftklebermaterial bestehen, welches ausgewählt ist aus der nicht abgeschlossenen Gruppe bestehend aus Haftklebstoffen basierend auf Acrylat, Kautschuk, Chlor-Kautschuk, Polyurethan, Styrolacrylat, Vinylacetat, Vinylacetat-Ethylen und/oder deren Mischungen und/oder deren Copolymerisaten, in der Regel vorliegend als Dispersions-Klebstoff, lösemittelbasierter Klebstoff oder Schmelzklebstoff, rein physikalisch härtend und/oder chemisch und/oder physikalisch nachvernetzend ausgerüstet. Nach momentanem Kenntnisstand der Anmelderin können vorteilhaft die Haftklebstoffe basierend auf Acrylat, Vinylacetat, Vinylacetat-Ethylen und/oder deren Mischungen und/oder deren Copolymerisate eingesetzt werden.

In einer weiteren Ausführungsform der Erfindung weist die Selbstklebefolie mindestens eine Sperrschicht auf, welche für Weichmacher des Belags und/oder des Untergrunds undurchlässig ist, so dass der Belag bzw. der Untergrund nicht an Weichmachern verarmt und die Dimensionen, die beim Verlegen vorgesehen sind, beibehalten bleiben. Zweckmäßig kann die Sperrschicht eine anorganische Sperrschicht sein, bevorzugt eine Metallschicht und/oder eine Oxidschicht und/oder eine Metalloxidschicht und aus Material ausgewählt sein, aus der nicht abgeschlossenen Gruppe Aluminium, Gold, Silber, Nickel, Kupfer, Chrom, Titan, Aluminiumoxid, Siliziumoxid, Aluminium-Silizium-Oxid sowie weiteren geeigneten Metalloxiden/Mischoxiden. Diese Materialien können beispielsweise durch Bedampfen aufgebracht werden oder als Folie kaschiert werden. Mit solchen Sperrschichten ist auf konstruktiv einfache Weise eine gleichmäßig dünne und formstabile Gestaltung der Selbstklebefolie möglich.

Um eine mögliche rückstandsfreie Wiederablösbarkeit der erfindungsgemäßen Selbstklebefolie zu ermöglichen, kann die untere Oberfläche eine Haftkleberbeschichtung mit geringerer Haftstärke als die Haftstärke der Haftkleberbeschichtung an der oberen Oberfläche aufweisen. Es kann aber auch beispielsweise bei der Verwendung für Treppen oder Sockelleisten zweckmäßig sein, dass die untere Oberfläche eine Haftkleberbeschichtung mit größerer Haftstärke als die Haftstärke der Haftkleberbeschichtung an der oberen Oberfläche aufweist, um dort beispielsweise die Verklebung auf unebenem Untergrund und/oder unter mechanischer Trittbelastung weiter zu verbessern.

Die Haftstärke kann dabei unter Messung der Haftkraft gemäß der Norm DIN EN 1939 erfolgen.

Um die rückstandsfreie Wiederablösbarkeit weiter zu Verbessern kann die Selbstklebefolie im Bereich ihrer Trägerschicht auch erfindungsgemäß besonders bevorzugt haftkleberverankernd ausgerüstet sein, z.B. mit einer Haftkleber verankernden Beschichtung oder Behandlung, wie etwa einer Primer-Beschichtung oder einer Koronisierung. Dies verbessert die Verankerung des Haftklebers zusätzlich und insbesondere im Zusammenspiel mit der erfindungsgemäßen Abstandshalterstruktur ist so auch ein besonders sicherer Halt dieser Struktur auf der Selbstklebefolie gegeben, da sich diese Struktur so auch nicht zusammen mit der Haftkleberbeschichtung von der Trägerschicht ablösen kann.

Um die Verarbeitbarkeit der erfindungsgemäßen Selbstklebefolie auf einfache konstruktive Weise zu verbessern, kann zumindest die Haftkleberbeschichtung der oberen Oberfläche mit einer entfernbaren Abdeckschicht versehen sein.

Auch kann die erfindungsgemäße Selbstklebefolie zweckmäßig zu einer Rolle gewickelt sein und so vertrieben werden.

Die Erfindung wird im Folgenden anhand der beispielhaft erläuterten Ausführungsformen näher beschrieben werden.
- Figur 1: zeigt einen schematischen Querschnitt durch eine Selbstklebefolie mit einer Abstandshalterstruktur gemäß einer ersten Ausführungsform der Erfindung;
- Figur 2: zeigt einen schematischen Querschnitt durch eine Selbstklebefolie mit einer Abstandshalterstruktur gemäß einer zweiten Ausführungsform der Erfindung;
- Figur 3: zeigt einen schematischen Querschnitt durch eine Selbstklebefolie mit einer Abstandshalterstruktur gemäß einer dritten Ausführungsform der Erfindung;
- Figur 4: zeigt einen schematischen Querschnitt durch eine Selbstklebefolie mit einer Abstandshalterstruktur gemäß einer vierten Ausführungsform der Erfindung;
- Figur 5: zeigt einen schematischen Querschnitt durch eine Selbstklebefolie mit einer Abstandshalterstruktur gemäß einer fünften Ausführungsform der Erfindung;
- Figur 6: zeigt mit den Figuren 6a bis 6i unterschiedliche linienförmige Abstandshalterstrukturen auf einer Selbstklebefolie.

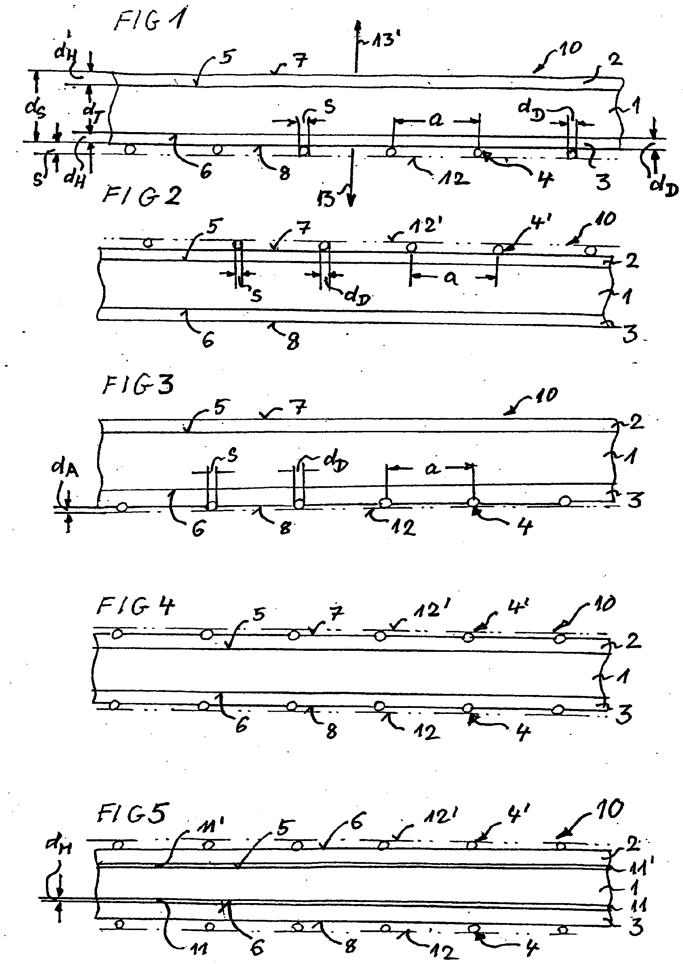

Figur 1 zeigt einen schematischen Querschnitt durch eine Selbstklebefolie 10 mit einer Abstandshalterstruktur 4 gemäß einer ersten Ausführungsform der Erfindung. Die Selbstklebefolie 10 weist eine Trägerschicht 1 aus einer Folie, z.B. einer Kunststofffolie, auf, die in dieser Ausführungsform der Erfindung aus einem Polyestermaterial besteht. Auf der oberen Oberfläche 5 der Trägerschicht 1 ist eine obere Haftkleberbeschichtung 2 angeordnet, die einen Acrylat-Haftkleber aufweist. Auf einer unteren Oberfläche 6 der Trägerschicht ist eine untere Haftkleberbeschichtung 3 angeordnet, die ebenfalls in dieser Ausführungsform der Erfindung aus einem Acrylat-Haftkleber besteht.

Die Dimensionen in den Figuren sind nicht maßstabsgerecht, sondern zur Verdeutlichung von Details stark verzerrt dargestellt. Die Dicke d_{T} der Trägerschicht 1 liegt in etwa im Bereich der Dicke d_{H} bzw. d_{H} der Haftkleberbeschichtungen, sie kann aber auch größer oder kleiner als diese Dicken sein. Beispielsweise kann die Dicke d_{T} der Trägerschicht 1 in etwa im Bereich von 15 -60 µm liegen, die Dicke d_{H} der oberen Haftkleberbeschichtung in etwa im Bereich von 20 -80 µm liegen und die Dicke Dicke d_{H} der unteren Haftkleberbeschichtung in etwa im Bereich von 20 -80 µm liegen.

Auf einer unteren Oberfläche 8 der unteren Haftkleberbeschichtung 3 ist eine Abstandshalterstruktur 4 angeordnet, die nur linien- oder punktförmig auf der unteren Haftkleberbeschichtung 3 haftend angeklebt ist. Diese Abstandshalterstruktur bildet orthogonal zu einer Flächennormale 13 der unteren Oberfläche 8 der unteren Haftkleberbeschichtung 3 eine Ebene 12, die mit einer strichdoppelpunktierten Linie markiert ist, aus und weist einen Abstand s auf, welcher beispielsweise einem Durchmesser d_{D} von Partikeln eines Pulvers entspricht, solange die Abstandshalterstruktur punktförmig ausgebildet ist oder entspricht einer Faserstärke s, wenn die Abstandshalterstruktur im Wesentlichen Fasern einer einheitlichen Faserstärke s entspricht.

Die Dicke d_{S} der Selbstklebefolie setzt sich zusammen aus der Dicke d_{T} der Trägerschicht und den Dicken d_{H} und d_{H}' der beiden Haftkleberbeschichtungen 2 und 3. Da der Abstand a zwischen Pulverkörnern oder Fasern der Abstandshalterstruktur 4 ein Vielfaches der Faserstärke s bzw. des Durchmessers d_{D} der Pulverpartikel ist, wird mit Hilfe der unteren Haftkleberbeschichtung 3 der Untergrund nahezu vollflächige von der relativ flexiblen und dünnen Selbstklebefolie 10 bedeckt.

Dennoch verbleiben entlang der Abstandshalter, insbesondere wenn sie aus Fasern bestehen, minimale Zwischenspalt, durch die Luft und Feuchtigkeitsmoleküle auch quer zur Längsrichtung der Selbstklebefolie entweichen können. Hinzu kommt in dieser ersten Ausführungsform der Erfindung, dass die Pulverpartikel bzw. die Fasern nur punktweise bzw. linienweise die untere Haftkleberbeschichtung berühren und sonst von Klebstoff freigehalten sind.

Die verbleibenden minimalen Zwischenspalt, durch die Luft oder Feuchtigkeitsmoleküle entweichen können, sind zwar deutlich geringer als bei den aus der Druckschrift DE 10 2004 052 022 B4 bekannten Luftkanälen, aber können nicht wie die bekannten Luftkanäle in dem nachgiebigen Material der Haftkleberbeschichtungen bei Belastung blockiert werden. Darüber hinaus sind die Dimensionen sowohl der Faserdicke als auch der Durchmesser der Pulverpartikel deutlich geringer als die Querschnitte der Luftkanäle aus der obigen Druckschrift, so dass die Klebewirkung der erfindungsgemäßen Selbstklebefolie 10 praktisch nicht beeinträchtigt wird.

Figur 2 zeigt einen schematischen Querschnitt durch eine Selbstklebefolie 10 mit einer Abstandshalterstruktur 4 gemäß einer zweiten Ausführungsform der Erfindung. Komponenten in den nachfolgenden Figuren 2 bis 6, welche die gleichen Funktionen wie die Komponenten in Figur 1 aufweisen, werden mit gleichen Bezugszeichen gekennzeichnet und nicht extra erörtert.

Der Unterschied dieser zweiten Ausführungsform der Erfindung gegenüber der ersten Ausführungsform besteht darin, dass nun die Abstandshalterstruktur 4' mit Fasern oder Partikeln auf der oberen Haftkleberbeschichtung 3 angeordnet ist, wobei die Abstandshalterstruktur 4' eine Abstandsebene 12', die wiederum mit einer strich-doppelpunktierten Linie markiert ist, ausbildet. Damit wird erreicht, dass sich Luftblasen und damit Auswölbungen eines Belags, der auch auf der oberen Haftkleberbeschichtung 2 aufgeklebt ist, nicht ausbilden können, da über minimale Zwischenräume, die durch die Abstandshalterstruktur gebildet werden, die Luft- und Feuchtigkeitsmoleküle zwischen dem Belag und der oberen Haftklebebeschichtung 2 entweichen können. Aufgrund der großflächigen Zwischenräume zwischen den Abstandshaltern in Form von Fasern oder Pulverpartikeln ist der Belag sicher auf der oberen Haftkleberbeschichtung großflächig aufklebbar.

Figur 3 zeigt einen schematischen Querschnitt durch eine Selbstklebefolie 10 mit einer Abstandshalterstruktur 4 gemäß einer dritten Ausführungsform der Erfindung. In dieser Ausführungsform ist wiederum die Abstandshalterstruktur auf der unteren Haftkleberbeschichtung 3 angeordnet, jedoch sind die Pulverpartikel und/oder die Fasern teilweise mit ihrem Querschnitt in der Haftkleberbeschichtung 3 eingebettet, so dass dieser eingebettete Teil des Querschnitts nicht zur Ausbildung von Zwischenräumen für einen Luft- oder Feuchtetransport zur Verfügung steht. Dennoch hat diese Ausführungsform der Erfindung den Vorteil, dass die Abstandshalter eine Höhe d_{A} aufweisen, welche zwar geringer ist als die Faserstärke s bzw. der Durchmesser d_{D} der Pulverpartikel, jedoch klebstofffrei ist.

Figur 4 zeigt einen schematischen Querschnitt durch eine Selbstklebefolie 10 mit einer Abstandshalterstruktur 4 gemäß einer vierten Ausführungsform der Erfindung, wobei in dieser Ausführungsform der Erfindung sowohl auf der unteren Haftkleberschicht 3 als auch auf der oberen Haftkleberschicht 2 jeweils eine Abstandshalterstruktur 4 bzw. 4' angeordnet ist. Diese Abstandshalterstrukturen weisen, wie in Figur 3 gezeigt, Pulverpartikel oder Fasern auf, deren Querschnitte teilweise in der oberen bzw. der unteren Haftkleberbeschichtung 2 bzw. 3 eingebettet sind.

Figur 5 zeigt einen schematischen Querschnitt durch eine Selbstklebefolie 10 mit einer Abstandshalterstruktur 4 gemäß einer fünften Ausführungsform der Erfindung, wobei in dieser fünften Ausführungsform wiederum sowohl die untere Haftkleberbeschichtung 3 als auch die obere Haftkleberbeschichtung 2 eine Abstandshalterstruktur 4 bzw. 4' aufweisen, bei denen die Pulverpartikel bzw. die Fasern punktweise bzw. linienweise die obere und die untere Haftkleberbeschichtung 2 bzw. 3 adhäsiv berühren.

Darüber hinaus sind zwischen der Trägerschicht 1 und den Haftkleberschichtungen 2 bzw. 3 Sperrschichten 11 und 11' angeordnet, die eine Diffusion oder Migration von Weichmachermolekülen des Untergrunds und des Belages in die Trägerschicht 1 sperren und damit eine Alterung und Dimensionsänderung beispielsweise des Belags verhindern.

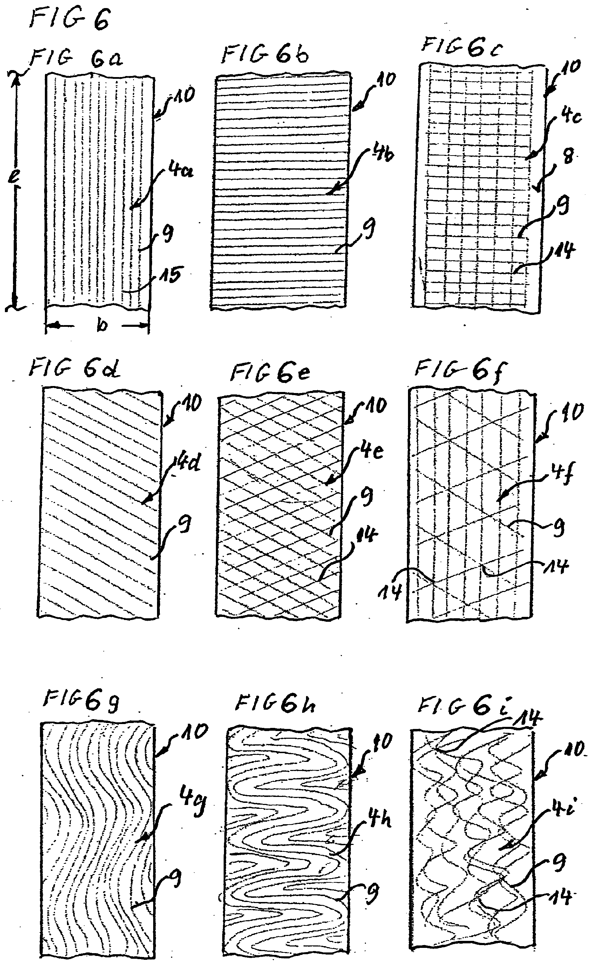

Figur 6 zeigt mit den Figuren 6a bis 6i unterschiedliche linienförmige Abstandshalterstrukturen 4a bis 4i auf einer Selbstklebefolie 10, wobei die Strukturen in den Figuren 6a bis 6f gradlinig aufgebrachte Faserstrukturen für die Abstandshalterstrukturen 4a bis 4f zeigen, während die Figuren 6g bis 6i kurvenförmige bzw. chaotisch aufgetragene Fasern der Abstandshalterstrukturen 4g bis 4i zeigen.

Im Einzelnen zeigt Figur 6a parallel laufende Fasern 9 in Längsrichtung der Selbstklebefolie 10 mit einer Breite b der Selbstklebefolie 10, wie sie oben im Detail beansprucht wird, und einer Fertigungslänge 1, die an unterschiedliche Anwendungsmöglichkeiten angepasst ist und in einem Endlosverfahren in Fertigungslängen 1 zerteilt wird. In Figur 6b ist die Lage der Fasern um 90° gegenüber der Figur 6a gedreht, so dass nun die Fasern quer zur Längsrichtung der Selbstklebefolie 10 ausgerichtet sind und ein Entlüften quer zur Längsrichtung der Selbstklebefolie 10 unterstützen. In Figur 6c werden die Faserlagen von Figur 6a und Figur 6b zu einem Gittermuster kombiniert, wobei Kreuzungspunkte 14 einen Abstand von der hier gezeigten Oberfläche 8 der unteren Haftkleberbeschichtung aufweisen, der bis maximal zu dem doppelten der Faserstärke eine Ebene orthogonal zu der Flächennormalen der Oberfläche 8 aufspannen können.

Figur 6d ist ein Beispiel für eine Abstandshalterstruktur 4d mit diagonal verlaufender Faserlage, die in Figur 6e zu einer Faserlage 4e ergänzt wird, in der sich diagonal ausgerichtete Fasern 9 kreuzen mit Kreuzungspunkten 14, die eine höhere Abstandsebene bis zum Doppelten der Faserstärke aufspannen.

Figur 6f zeigt eine Kombination aus diagonal gekreuzten Fasern und längs verlaufenden Fasern. Dabei fallen in Bereichen der Längsfasern 15 teilweise die Kreuzungspunkte 14 mit den Längsfasern zusammen, so dass sich an derartigen Positionen maximal eine dreifache Abstandshöhe innerhalb der Abstandhaltestruktur ausbilden kann.

Figur 6g zeigt eine Abstandshalterstruktur 4g mit kurvenförmig angeordneten einander nicht kreuzenden Fasern 9, die im Wesentlichen in Längsrichtung der Selbstklebefolie 10 ausgerichtet sind, während in Figur 6h die kurvenförmig angeordneten Fasern 9 der Abstandshalterstruktur 4h einen vergrößerten Anteil an querliegenden Faserbereichen aufweisen. Schließlich zeigt Figur 6i eine chaotische Abstandshalterstruktur 4i, die sogar mehr als dreifache Überlagerungen in Kreuzungspunkten 14 aufweisen kann.

Obwohl zumindest beispielhafte Ausführungsformen in der vorhergehenden Beschreibung gezeigt wurden, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der Selbstklebefolie in irgendeiner Weise zu beschränken. Vielmehr stellt die vorhergehende Beschreibung dem Fachmann einen Plan zur Umsetzung zumindest einer beispielhaften Ausführungsform der Selbstklebefolie zur Verfügung, wobei zahlreiche Änderungen in der Funktion und der Anordnung der Selbstklebefolie von in beispielhaften Ausführungsformen beschriebenen Elementen gemacht werden können, ohne den Schutzbereich der angefügten Ansprüche und ihrer rechtlichen Äquivalente zu verlassen.

Erfindungsgemäß kann mit der beschriebenen Selbstklebefolie gegenüber alternativen Entlüftungssystemen mit deutlich geringeren Klebkraftverlusten operiert werden. Der Tack (Klebrigkeit) wird deutlich stärker als die Klebkräfte reduziert so dass auch eine Repositionierung trotz hervorragender Verankerung möglich ist. Außerdem treten kaum oder keine Veränderungen der Oberflächenstruktur von auf der Selbstklebefolie applizierten Belägen auf.

### Bezugszeichenliste

- 1: Trägerschicht
- 2: obere Haftkleberbeschichtung
- 3: untere Haftkleberbeschichtung
- 4: Abstandshalterstrukturen mit 4, 4', 4a bis 4i
- 5: obere Oberfläche (von 1)
- 6: untere Oberfläche (von 1)
- 7: obere Oberfläche (von 2)
- 8: untere Oberfläche (von 3)
- 9: Faser
- 10: Selbstklebefolie
- 11: Sperrschicht
- 12: Ebene
- 13: Flächennormale
- 14: Kreuzungspunkt
- 15: Längsfaser

- b: Breite von 10
- d_{D}: mittlerer Durchmesser der Pulverpartikel
- d_{H}: Dicke der Haftkleberschicht
- d_{M}: Dicke der Sperrschicht
- d_{S}: Dicke der Selbstklebefolie
- d_{T}: Dicke der Trägerschicht
- s: Faserstärke

## Patentansprüche

1. Selbstklebefolie, zum Verkleben eines Belags auf einem Untergrund, wobei die Selbstklebefolie (10) eine Trägerschicht (1) aus einer Folie, welche an einer oberen, dem Belag zugewandten Oberfläche (5) und an einer unteren, dem Untergrund, insbesondere einem Fußboden, einer Treppe oder einer Wand, zugewandten Oberfläche (6) mit einer Haftkleberbeschichtung (2, 3) beschichtet ist, **dadurch gekennzeichnet, dass** die Selbstklebefolie (10) zumindest an einer ihrer Oberflächen (5, 6) in einer Ebene, welche orthogonal zu einer Flächennormale der mindestens einen Oberfläche (5, 6) der Selbstklebefolie (10) verläuft, mit einer linienförmigen oder punktförmigen Abstandshalterstruktur (4) zum Untergrund hin oder zum Belag hin zwischen der Selbstklebefolie (10) und dem Untergrund oder zwischen der Selbstklebefolie (10) und dem Belag ausgebildet ist und die Abstandhalterstruktur (4) zumindest teilweise nicht von Haftkleberbeschichtung (2, 3) umgeben ist.

2. Selbstklebefolie nach Anspruch 1, **dadurch gekennzeichnet, dass** die Abstandshalterstruktur (4) sowohl auf der unteren als auch auf der oberen Oberfläche (7, 8) der jeweiligen Haftkleberbeschichtung (2, 3) ausgebildet ist.

3. Selbstklebefolie nach Anspruch 1 oder 2, **dadurch gekennzeichnet, dass** die Abstandshalterstruktur (4) teilweise auf der Haftkleberbeschichtung (2, 3) punktförmig oder linienförmig angeordnet ist und auf der Haftkleberbeschichtung (2, 3) punktförmig oder linienförmig mindestens teilweise haftkleberfrei angeordnet ist.

4. Selbstklebefolie nach einem der Ansprüche 1 bis 3, **dadurch gekennzeichnet, dass** die Abstandshalterstruktur (4) mit ihrem Querschnitt teilweise in der Haftkleberbeschichtung (2, 3) eingebettet oder darauf aufgelegt ist.

5. Selbstklebefolie nach einem der Ansprüche 1 bis 4, **dadurch gekennzeichnet, dass** die Selbstklebefolie (10) eine begrenzte Breite (b) und unterschiedliche Fertigungslängen (l) aufweist, wobei die punktweise Abstandshalterstruktur (4) pulverförmige Partikel und/oder die linienförmige Abstandshalterstruktur (4a bis 4i) Fasern (9) aufweist.

6. Selbstklebefolie nach Anspruch 5, **dadurch gekennzeichnet, dass** die Fasern (9) der Abstandshalterstruktur (4a bis 4i) in Längsrichtung (4a) oder in Querrichtung (4b) oder diagonal (4d) auf der Selbstklebefolie (10) ausgerichtet sind.

7. Selbstklebefolie nach Anspruch 5, **dadurch gekennzeichnet, dass** die Fasern (9) chaotisch (4i), sich kreuzend (4c, 4e, 4f) oder kurvenartig (4g, 4h) ausgerichtet sind.

8. Selbstklebefolie nach Anspruch 5, **dadurch gekennzeichnet, dass** die Fasern (9) vorgefertigte textile Strukturen aufweisen.

9. Selbstklebefolie nach einem der Ansprüche 5 bis 8, **dadurch gekennzeichnet, dass** die Fasern (9) als Monofasern oder als Multifasern, bevorzugt als Fasern (9) in Form von Garnen verdrillt oder in Form von Faserbündeln ausgebildet sind.

10. Selbstklebefolie nach einem der Ansprüche 5 bis 9, **dadurch gekennzeichnet, dass** die Fasern (9) eine Faser aus der Gruppe, Glasfaser, Kohlefaser, Polyamidfaser, Polyesterfaser, Polyethylenfaser, Polypropylenfaser, Baumwollfaser, Cellulosefaser, Viskosefaser oder Metallfaser aufweisen.

11. Selbstklebefolie nach einem der Ansprüche 5 bis 10, **dadurch gekennzeichnet, dass** die Fasern (9) einen Bereich von 0,05 bis 10,00 % einer entsprechenden Oberfläche der Selbstklebefolie abdecken, bevorzugt den Bereich 0,5 - 5,0 %, besonders bevorzugt den Bereich 0,1- 2,0 %.

12. Selbstklebefolie nach einem der Ansprüche 5 bis 11, **dadurch gekennzeichnet, dass** die Fasern (9) als Monofasern oder als Multifasern eine Faserstärke s zwischen 1 µm ≤ s ≤ 200 µm aufweisen.

13. Selbstklebefolie nach einem der Ansprüche 5 bis 12, **dadurch gekennzeichnet, dass** die Fasern (9) in einem Abstand a voneinander zwischen 0,1 mm ≤ a ≤ 25 mm angeordnet sind.

14. Selbstklebefolie nach Anspruch 5, **dadurch gekennzeichnet, dass** die pulverförmigen Partikel der Abstandshalterstruktur (4) eine Flächenbelegung w zwischen 0,01 g/m² ≤ w ≤ 5,0 g/m² ausbilden.

15. Selbstklebefolie nach Anspruch 5 oder Anspruch 6, **dadurch gekennzeichnet, dass** die pulverförmigen Partikel einen mittleren Partikeldurchmesser d_{D} zwischen 1 µm ≤ d_{D} ≤ 200 µm aufweisen.

16. Selbstklebefolie nach einem der vorhergehenden Ansprüche, **dadurch gekennzeichnet, dass** die Selbstklebefolie (10) mindestens eine Sperrschicht (11) aufweist, welche für Weichmacher des Belags und/oder der Untergrunds undurchlässig ist.

## Claims

1. Self-adhesive film for bonding a covering to a substrate, wherein the self-adhesive film (10) has a backing (1) made of a film that is coated with a contact adhesive coating (2, 3) on a top surface (5) facing the covering and on a bottom surface (6) facing the substrate, in particular a floor, a staircase, or a wall, **characterized in that** the self-adhesive film (10) is, on at least one of its surfaces (5, 6) in a plane that is orthogonal to a surface normal of the at least one surface (5, 6) of the self-adhesive film (10), designed with a linear or punctiform spacer structure (4) toward the substrate or toward the covering, between the self-adhesive film (10) and the substrate or between the self-adhesive film (10) and the covering, and at least part of the spacer structure (4) is not surrounded by contact adhesive coating (2, 3).

2. Self-adhesive film according to claim 1, **characterized in that** the spacer structure (4) is implemented on both the bottom and top surfaces (7, 8) of the applicable contact adhesive coating (2, 3).

3. Self-adhesive film according to claim 1 or 2, **characterized in that** the spacer structure (4) is positioned partially on the contact adhesive coating (2, 3) in a punctiform or linear fashion, and is positioned at least partially free of adhesive on the contact adhesive coating (2, 3) in a punctiform or linear fashion.

4. Self-adhesive film according to any one of claims 1 to 3, **characterized in that** the cross-section of the spacer structure (4) is partially embedded in the contact adhesive coating (2, 3) or placed thereon.

5. Self-adhesive film according to any one of claims 1 to 4, **characterized in that** the self-adhesive film (10) has a limited width (b) and different production lengths (1), wherein the point spacer structure (4) has powder particles and/or the linear spacer structure (4a to 4i) has fibers (9).

6. Self-adhesive film according to claim 5, **characterized in that** the fibers (9) of the linear spacer structure (4a to 4i) are oriented in the longitudinal direction (4a) or in the transverse direction (4b) or diagonally (4d) on the self-adhesive film (10).

7. Self-adhesive film according to claim 5, **characterized in that** the fibers (9) are oriented in a random (4i), intersecting (4c, 4e, 4f), or curved (4g, 4h) manner.

8. Self-adhesive film according to claim 5, **characterized in that** the fibers (9) have prefabricated textile structures.

9. Self-adhesive film according to any one of claims 5 to 8, **characterized in that** the fibers (9) are implemented as monofibers or as multifibers, preferably as fibers (9) twisted in the form of yarns or in the form of fiber bundles.

10. Self-adhesive film according to any one of claims 5 to 9, **characterized in that** the fibers (9) have a fiber from the group consisting of glass fibers, carbon fibers, polyamide fibers, polyester fibers, polyethylene fibers, polypropylene fibers, cotton fibers, cellulose fibers, viscose fibers, or metal fibers.

11. Self-adhesive film according to any one of claims 5 to 10, **characterized in that** the fibers (9) cover a range from 0.05% to 10.00% of a pertinent surface of the self-adhesive film, preferably the range of 0.5 - 5.0%, especially preferably the range of 0.1 - 2.0%.

12. Self-adhesive film according to any one of claims 5 to 11, **characterized in that** the fibers (9), as monofibers or as multifibers, have a fiber thickness s between 1 µm ≤ s ≤ 200 µm.

13. Self-adhesive film according to any one of claims 5 to 12, **characterized in that** the fibers (9) are arranged at a spacing a from one another between 0.1 mm ≤ a ≤ 25 mm.

14. Self-adhesive film according to claim 5, **characterized in that** the powder particles of the spacer structure (4) constitute a weight per unit area w between 0.01 g/m² ≤ w ≤ 5.0 g/m².

15. Self-adhesive film according to claim 5 or claim 6, **characterized in that** the powder particles have an average particle diameter d_{D} between 1 µm ≤ d_{D} ≤ 200 µm.

16. Self-adhesive film according to any one of the preceding claims, **characterized in that** the self-adhesive film (10) has at least one barrier layer (11) that is impermeable for plasticizers of the covering and/or of the substrate.

## Revendications

1. Feuille autocollante pour coller un revêtement sur un substrat, la feuille autocollante (10) comportant une couche-support (1) en film de plastique qui est enduite d'une couche de colle adhésive (2, 3) sur une face supérieure (5) tournée vers le revêtement et sur une face inférieure (6) tournée vers le substrat, notamment un plancher, un escalier ou un mur, **caractérisée en ce que** la feuille autocollante (10) au moins dans une de ses faces supérieures (5, 6), dans un plan qui est perpendiculaire à une normale de la au moins une surface (5, 6) de la feuille autocollante (10), comporte une structure d'écartement (4) linéaire ou ponctuelle dirigée vers le revêtement ou le substrat, située entre la feuille autocollante (10) et le substrat, ou bien entre la feuille autocollante (10) et le revêtement, la structure d'écartement (4) n'étant pas entourée de la couche de colle adhésive (2, 3), au moins partiellement.

2. Feuille autocollante selon la revendication 1, **caractérisée en ce que** la structure d'écartement (4) se trouve tant sur la face inférieure que sur la face supérieure (7, 8) de la couche de colle adhésive correspondante (2, 3).

3. Feuille autocollante selon la revendication 1 ou 2, **caractérisée en ce que** la structure d'écartement (4) est agencée ponctuellement ou de façon linéaire partiellement sur la couche de colle adhésive (2, 3) ou est agencée ponctuellement ou de façon linéaire au moins partiellement sur la couche de colle adhésive (2, 3) sans colle adhésive.

4. Feuille autocollante selon une des revendications 1 à 3 **caractérisée en ce que** la structure d'écartement (4) en coupe transversale est partiellement noyée dans la couche de colle adhésive (2, 3) ou est posée dessus.

5. Feuille autocollante selon une des revendications 1 à 4 **caractérisée en ce que** la feuille autocollante (10) présente une largeur limitée (b) et différentes longueurs (1) de fabrication, la structure d'écartement (4) ponctuelle présentant des particules pulvérulentes et/ou la structure d'écartement linéaire (4a à 4i) présentant des fibres (9).

6. Feuille autocollante selon la revendication 5 **caractérisée en ce que** les fibres (9) de la structure d'écartement (4a à 4i) sont orientées dans le sens de la longueur (4a), de la largeur (4b) ou en diagonale (4d) sur la feuille autocollante (10).

7. Feuille autocollante selon la revendication 5, **caractérisée en ce que** les fibres (9) sont orientées de façon chaotique (4i), en se croisant (4c, 4e, 4f) ou sont disposées en courbes (4g, 4h).

8. Feuille autocollante selon la revendication 5 **caractérisée en ce que** les fibres (9) présentent des structures textiles préfabriquées.

9. Feuille autocollante selon une des revendications 5 à 8 **caractérisée en ce que** les fibres (9) sont des monofibres ou multifibres, de préférence des fibres (9) sous la forme de fils torsadés ou sous la forme de faisceaux de fibres.

10. Feuille autocollante selon une des revendications 5 à 9, **caractérisée en ce que** les fibres (9) comportent une fibre du groupe des fibres de verre, fibres de carbone, fibres polyamide, fibres polyester, fibres polyéthylène, fibres polypropylène, fibres de coton, fibres de cellulose, de viscose ou fibres métalliques.

11. Feuille autocollante selon une des revendications 5 à 10, **caractérisée en ce que** les fibres (9) recouvrent une zone de 0,05 à 10,00 % d'une surface correspondante de la feuille autocollante, de préférence la zone 0,5 - 5,0 %, plus préférentiellement la zone de 0,1- 2,0 %.

12. Feuille autocollante selon une des revendications 5 à 11 **caractérisée en ce que** les fibres (9), comme monofibres ou multifibres ont une épaisseur de fibres s entre 1 µm ≤ s ≤ 200 µm.

13. Feuille autocollante selon une des revendications 5 à 12 **caractérisée en ce que** les fibres (9), sont agencées avec un écartement a les séparant entre 0,1 mm ≤ a ≤ 25 mm.

14. Feuille autocollante selon la revendication 5 **caractérisée en ce que** les particules pulvérulentes, de la structure d'écartement (4) occupent une surface w entre 0,01 g/m² ≤ w ≤ 5,0 g/m².

15. Feuille autocollante selon la revendication 5 ou la revendication 6 **caractérisée en ce que** les particules pulvérulentes présentent un diamètre de particule moyen d_{D} entre 1 µm ≤ d_{D} ≤ 200 µm.

16. Feuille autocollante selon une des revendications précédentes **caractérisée en ce que** la feuille autocollante (10) présente au moins une couche barrière (11) qui est imperméable aux plastifiants du revêtement et/ou du substrat.
